# EUROPEAN PATENT APPLICATION

(11) **EP 1 420 601 A2**
(43) Date of publication of application: **19.05.2004**
(21) Application number: 03025474.2
(22) Date of filing: 06.11.2003
(51) Int. Cl.: H04Q 7/28

(54) **Wireless communication system and a hand-off method therefor**

(30) Priority: 06.11.2002 KR 2002068344
(71) Applicant: SAMSUNG ELECTRONICS CO. LTD., Suwon-city, Kyounggi-do 441-742 (KR)
(72) Inventor: Eom, Doo-seop, Electronic Engineering, Sungbuk-gu,Seoul (KR); Tchan, Kyun-hyon, Electronic Engineering, Sungbuk-gu, Seoul (KR); Lee, Tae-jin, Jangan-gu, Suwon-city, Gyunggi-do (KR); Lee, Won-hee, Electronic Engineering, Sungbuk-gu, Seoul (KR); Kwon, Joon-hwan, Electronic Engineering, Sungbuk-gu, Seoul (KR); Joo, Yang-ick, Electronic Engineering, Sungbuk-gu, Seoul (KR); Kim, Yong-suk, Su-gu, Daejeon-city (KR); Chang, Ki-soo, 661-802, Sannamoosil Geonyoung Apt., Suwon-city, Gyunggi-do (KR)
(74) Representative: Grünecker, Kinkeldey, Stockmair & Schwanhäusser Anwaltssozietät

(57) **Abstract**

Disclosed is a wireless communication system capable of minimizing the hand-off throughput for wireless communication systems. The wireless communication system according to the present invention includes a first communication device for carrying out an inquiry and paging with respect to a wireless communication device located within a communication allowance range, and starting a connection with the wireless communication device; and a second communication device for receiving and transmitting data with the wireless communication device when the wireless communication device connected with the first communication device is cut off by a hard hand-off.

## Description

### BACKGROUND OF THE INVENTION

The present application claims the priority of Korean Patent Application No. 10-2002-68344, filed on November 6, 2002, in the Korean Intellectual Property Office, the disclosure of which is incorporated herein in its entirety by reference.

### 1. Field of the Invention

The present invention relates to a system and method for increasing a communication speed for wireless communication systems, and more particularly to a system and method for supporting hand-offs due to mobile movements in time division duplex(TDD) wireless communication systems.

### 2. Description of the Prior Art

Bluetooth is a code name for wireless data communication technologies covering electric communications, networking, computing, and consumables sectors. The Bluetooth technology replaces the plurality of cable connections necessary among devices through one wireless connection in a local area. For example, if the Bluetooth wireless technology is implemented in a portable phone or a laptop computer, the device may be connected to other devices through Bluetooth without cable connections. Devices that can be part of the Bluetooth technology system are printers, personal digital assistants(PDAs), desktops, facsimile machines, keyboards, joysticks, and so on, which means that all digital devices can actually be part of the Bluetooth technology system.

In general, the Bluetooth technology has the maximum data transmission rate of IMpbs and the maximum transmission distance of 10m. The IMpbs transmission rate is a transmission rate that can be easily implemented at a low cost with frequencies in a range of a 2.4GHz Industrial Scientific Medical(ISM) frequency band which a user can use without any license. Further, the 10m transmission distance has been determined based on the judgment that it is enough for transmissions between a device a user carries and a personal computer placed on his or her desk.

Further, since the Bluetooth technology has been devised to operate in the noisy radio frequency environments, using a method of hopping around frequencies 1600 times a second can stably send and receive data in wireless frequencies with lots of noise. Here, the frequency hopping method is referred to as a frequency hopping spread spectrum (FHSS) method. The FHSS method first divides a given frequency band into many hopping channels, and allocates different hopping channels based on a predetermined order when frequency-modulating a signal firstly modulated on the transmission side(intermediate frequency) into a radio frequency(RF) band(2.4GHz). At this time, channels on which signals are allocated are changed at a high speed so that multi-channel interferences and narrow-bandwidth impulse noise influences can be reduced. A receiving stage connects signals received from different hopping channels in the same order as in the transmission stage to recover original signals. The IEEE 802.11 uses 79 hopping channels which are arranged with a 1MHz interval between each other. An interval more than 6MHz is placed between two time-continuous hopping channels to avoid mutual interference when signals are allocated while hopping among a plurality of channels, and the rate hopping around channels(hopping rate) is defined to be 2.5 times per second.

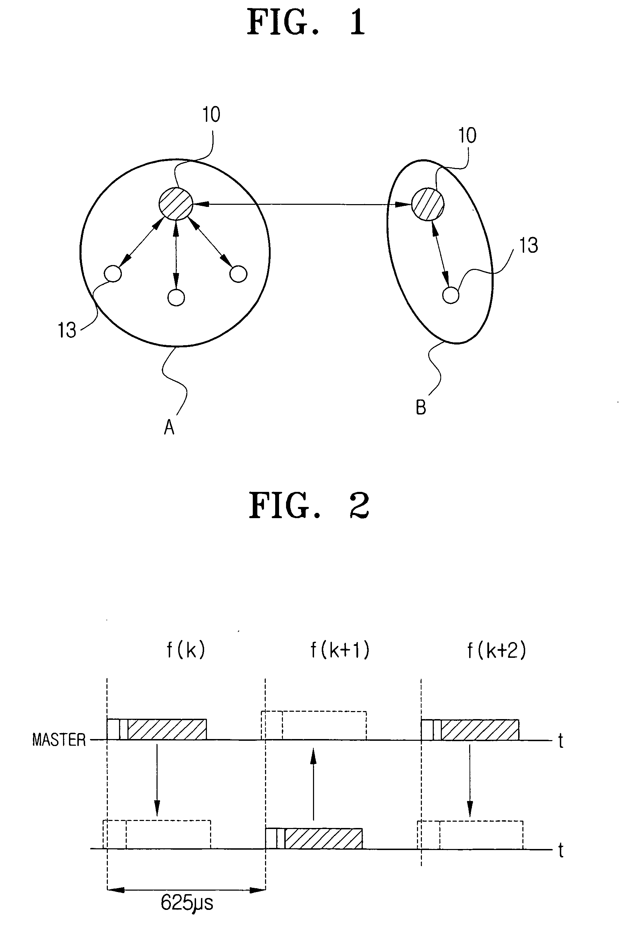

A Bluetooth technology system supports one-to-one connections as well as one-to-multiple connections. As shown in Fig. 1, the Bluetooth technology system can be organized and connected with a plurality of piconets, and the individual piconets are identified by orders hopped with different frequencies. Here, the piconet means a construction unit of a Bluetooth technology system formed with connections of one or more slave devices with respect to one master device. One piconet can have one master and seven slaves at maximum. Further, an organized connection of a plurality of piconets is referred to a scatternet.

When two or more slaves are connected to one master in the piconet, the master allocates a temporary three-bit address to each slave to be used for slave identification when each slave is activated, and every packet exchanging between the master and a slave carries an access request address(AM_ADDR). Here, the AM-ADDR is used as an identification factor for identifying active members participating in a piconet, and used for moving every packet from slaves to the master and vice versa. An allocated AM_ADDR is aborted when the slave is in the park mode, and has to be allocated with a new AM_ADDR as the slave is connected again to the master. The reason a piconet is limited to one master and seven slaves is because the AM_ADDR the master allocates to active slaves is restrained to a 3-bit length in the Bluetooth technology standard. That is, because the address "000" of the maximum eight addresses is used for broadcasting from the master to the slaves, seven addresses from "001" to "111", can be used.

The master device and the slave devices basically perform bidirectional communications in TDD method in the unit of one hopping slot (625*µs* = 1/1600 seconds ).

Fig. 2 is a view for showing TDD communications between the master and the slaves. In Fig. 2, each channel allocated as a time slot has the length of 625*µs.* The number of time slots is determined based on a Bluetooth clock of the piconet master. Further, the master and slaves can alternatively transmit packets during a time slot. That is, the master transmits packets in even-numbered time slots only, and the slaves transmit packets in odd-numbered time slots. Further, packets transmitted by the master or the slaves have to be implemented in five time slots or less. Here, packets mean the unit of data transmitted from a piconet channel.

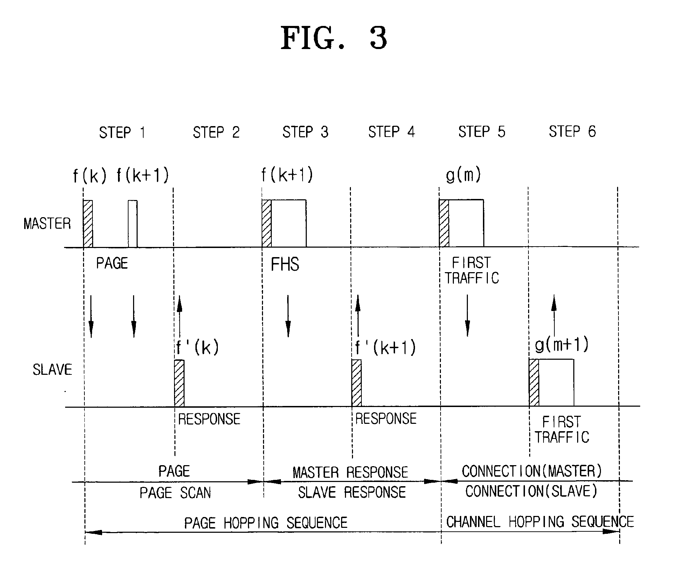

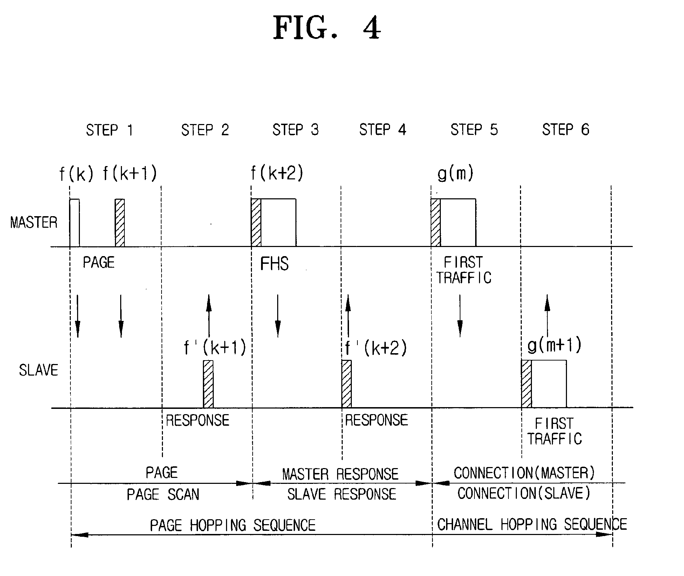

Hand-off inquiry and paging processes are used to connect the master and the slaves. The inquiry process identifies the addresses and clocks of units in an access range of a Bluetooth system. The paging process is periodically performed by the master and wakes up the slaves. The slave responses to the master pagings are shown in Fig. 3 and Fig. 4.

Fig. 3 is a view for showing an initial connection when a slave responds to the first paging message of the master, and Fig. 4 is a view for showing an initial connection when the slave responds to the second paging message of the master.

If a paging message transmitted by the master is successfully received by a slave, the hopping frequencies of the master and the slave are synchronized. All the masters and slaves maintain connection states, and execute a response routine to exchange information.

The master device determines the entire characteristics with respect to the channels in a piconet. The Bluetooth device address (BD_ADDR) of the master decides a frequency hopping sequence and a channel access code. That is, the master's clock decides the phase in the hopping sequence and sets timing. Further, the master controls the traffic on channels. Any digital device can be the master, and, after a piconet is formed, the roles of the master and the slave can be changed. An offset is added to a negative clock of the slave in order to temporarily synchronize the slave's clock to the master's clock. If a connection starts, the parameters of the master have to be transferred to the slave from the master.

Referring to Fig. 3 and Fig. 4, frequencies f(k), f(k+1), and f(k+2) are page hopping sequence frequencies determined by the BD_ADDR of the slave. The frequencies f(k), f (k+1), and f(k+2) corresponds to page response frequencies from the slave to the master. A frequency g(m) belongs to a channel hopping sequence.

Table 1 shows initial messages exchanging between the master and the slaves.

**Table 1**

| Steps | Message | Direction | Hopping sequence | Access code and clock |
|---|---|---|---|---|
| 1 | Slave ID | Master -> Slave | Paging | Slave |
| 2 | Slave ID | Slave -> Master | Paging | Slave |
| | | | Response | |
| 3 | FHS | Master -> Slave | Paging | Slave |
| 4 | Slave ID | Slave -> Master | Paging Response | Slave |
| 5 | First packet Master | Master -> Slave | Channel | Master |
| 6 | First packet Master | Slave -> Master | Channel | Master |

In step 1, the master is in the paging state, and the slave is in the scan state. When the slave enters the paging scan state, the slave selects a scan frequency corresponding to the page hopping sequence of the master. In this step, let's assume that a page message(slave's device access code) transmitted by the master reaches a slave.

If the device access code is recognized, the slave transmits a response message in step 2. The response message transmitted by the slave is configured with slave's device access code only. The slave transmits the response message from the start of the received page message(slave's ID packet) in 625*µs,* and a hopping frequency of the response message matches with a hopping frequency for the received page message. During the exchange of the initial message, the slave uses a page response hopping sequence to return information to the master. After transmitting the response message, the receiver of the slave is activated in 312.5*µ*s following the start of the response message and awaits Frequency Hopping Synchronization(FHS) packets from the master(Step 3). Here, the FHS packets, as shown in Fig. 4, can reach the master in 312.5*µs* when the slave responds to the second paging message of the master. That is, in this case, the 625*µ*s interval as in the RX/TX timing is not applied.

If the slave receives the FHS packets in the slave's response state, the slave uses a page response hopping sequence to return to the master a response configured with the slave's device access code only to indicate the receipt of the FHS packets(Step 4). The response packet transmission is based on the FHS packets. Further, the slave changes the access code and clock to the master's channel received from the FHS packets. That is, the slave enters its connection state in Step 5, and, from that time, the slave uses the master's clock and the master's BD_ADDR in order to determine the channel hopping sequence and the channel access code. A connection mode begins with a POLL packet transmitted by the master. In here, the POLL packet has the same structure as the NULL packet. However, the NULL packet does not need any response, whereas the POLL packet has to respond to whether or not the receiving side has data to be transmitted therefrom. Further, the POLL packet itself does not affect any response controlled by an Automatic Repeat reQuest(ARQ) or a Sequential Numbering scheme(SEQN) or a retransmission control method. The POLL is typically used for the master to check whether a slave exists in the piconet. If the slave exists, the slave responds to the master.

In Step 6, the slave responds according to a packet type. If the POLL packet is not received by the slave or a response packet is not received by the master during the allocated number of time slots after the FHS packets are received, the master and the slave return to the paging and the paging scan state respectively.

As above, in case of using the hard hand-off method, a mobile unit has to start the inquiry process and the paging process again to connect to another Bluetooth system, and, if necessary, a process has to be done to exchange operations from the slave to the master. Such processes for inquires, pagings, and operation exchanges may be factors delaying time for data communications as well as degrade the system performance in direct association with data loss.

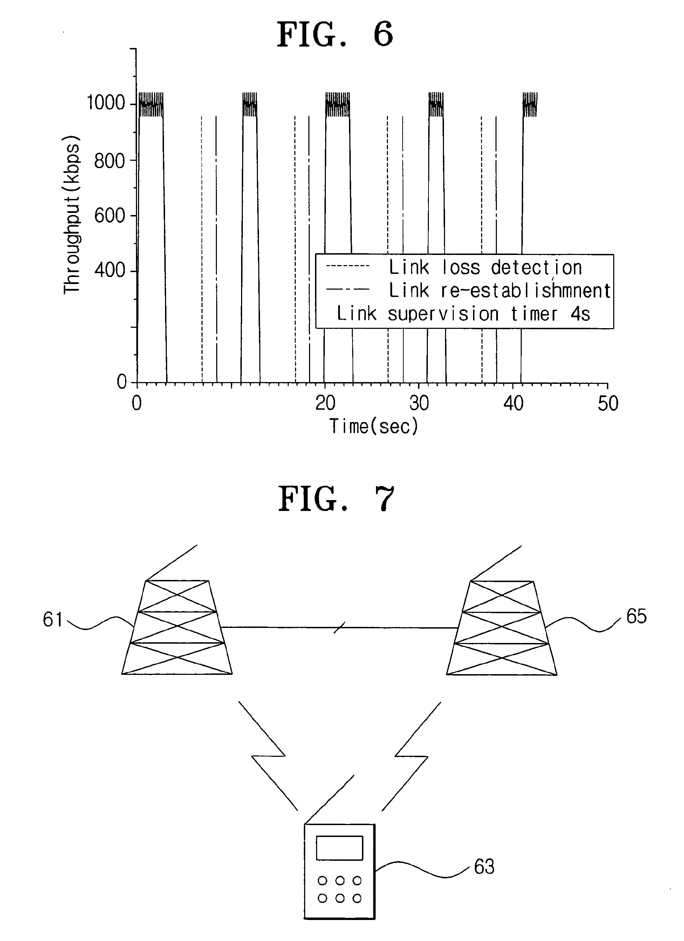

Further, referring to a hard hand-off throughput shown in Fig. 6, it can be seen that the throughput greatly drops due to the Transmission-Control Protocol(TCP) exponential back-off even though a hand-off is completed to start a re-connection when the hard hand-off method is applied.

### SUMMARY OF THE INVENTION

The present invention has been devised to solve the above problem, it is an object of the present invention to provide a wireless communication system and method for reducing time required for re-connections without modifying the existing TCP and any hierarchically higher protocols to minimize the influence of the TCP exponential back-off so that the throughput is prevented from getting worse.

In order to achieve the above object, a wireless communication system according to the present invention comprises a first communication device for carrying out an inquiry and paging with respect to a wireless communication device located within a communication allowance range, and starting a connection with the wireless communication device; and a second communication device for receiving and transmitting data with the wireless communication device disconnected, when the wireless communication device connected with the first communication device is cut off by a hard hand-off.

In this case, the first communication device, if connected with the wireless communication device, transmits to the second communication device information on an address and a clock of the wireless communication device which are determined based on the inquiry, and if the first communication device is disconnected from the wireless communication device, the second communication device carries out paging with respect to the wireless communication device, based on the received information on the address and clock, to start a connection with the wireless communication device.

Further, the first communication device and the second communication device are connected by a wire network. The first communication device, after being connected with the wireless communication device, checks a connection state with the wireless communication device at every predetermined period, and, if the first communication device is disconnected from the wireless communication device, the second communication device is instructed to perform the paging with respect to the wireless communication device.

In the meantime, the present invention provides a communication method comprising steps of carrying out an inquiry and a paging by a first communication device; starting data reception and transmission of the first communication device with a wireless communication device located within a communication allowance range by the inquiry and paging; transmitting from the first communication device to a second communication device information on an address and clock of the wireless communication device which is determined based on the inquiry; carrying out the paging with respect to the wireless communication device by the second communication device based on the received address and clock information, if the wireless communication device is disconnected with the first communication device by a hard hand-off; and starting the data reception and transmission of the wireless communication device with the second communication device by the carrying-out of the paging.

### BRIEF DESCRIPTION OF THE DRAWINGS

The above object and other features of the present invention will become more apparent by describing in detail a preferred embodiment thereof with reference to the attached drawings, in which:

Fig. 1 is a view for showing a scattemet of a Bluetooth technology system;

Fig. 2 is a view for showing TDD communications between the master and a slave;

Fig. 3 is a view for showing initial connections when the slave responds to the first paging message of the master;

Fig. 4 is a view for showing initial connections when the slave responds to the second paging message of the master;

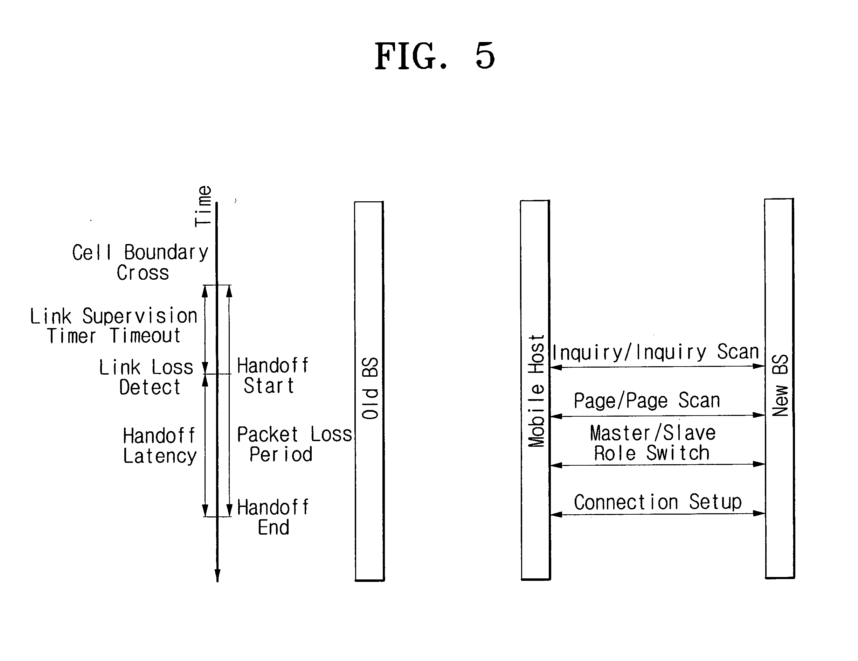

Fig. 5 is a view for showing an example of a hard hand-off method;

Fig. 6 is a view for showing the throughputs of Fig. 5;

Fig. 7 is a view for schematically showing a wireless communication system according to an embodiment of the present invention;

Fig. 8 is a view for showing an example of the hand-off method of Fig. 7;

Fig. 9 is a flow chart for showing the hand-off method of Fig. 7; and

Fig. 10 is a view for showing the throughputs of Fig. 8.

### DESCRIPTION OF THE PREFERRED EMBODIMENT

Hereinafter, the present invention will be described in detail with reference to the accompanying drawings.

Fig. 7 is a view for schematically showing a wireless communication system according to an embodiment of the present invention.

Referring to Fig. 7, the wireless communication system includes a first communication device 61, a wireless communication device 63, and a second communication device 65. The first communication device 61, wireless communication device 63, and second communication device 65 are respectively provided with a Bluetooth technology system. Further, the first communication device 61 and the second communication device 65 may be connected via a separate wire network. Here, it is preferable that the first communication device 61 and the second communication device 65 are preferably spaced from each other and fixed at specific locations, within a communication allowance range, when the devices 61 and 65 are connected to each other through a wireless network without the connections of a separate wire network.

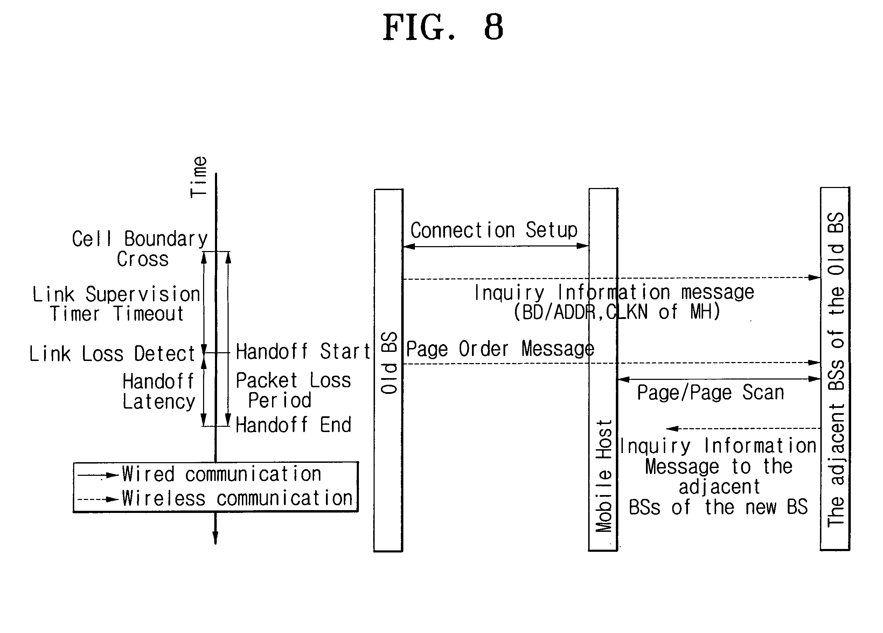

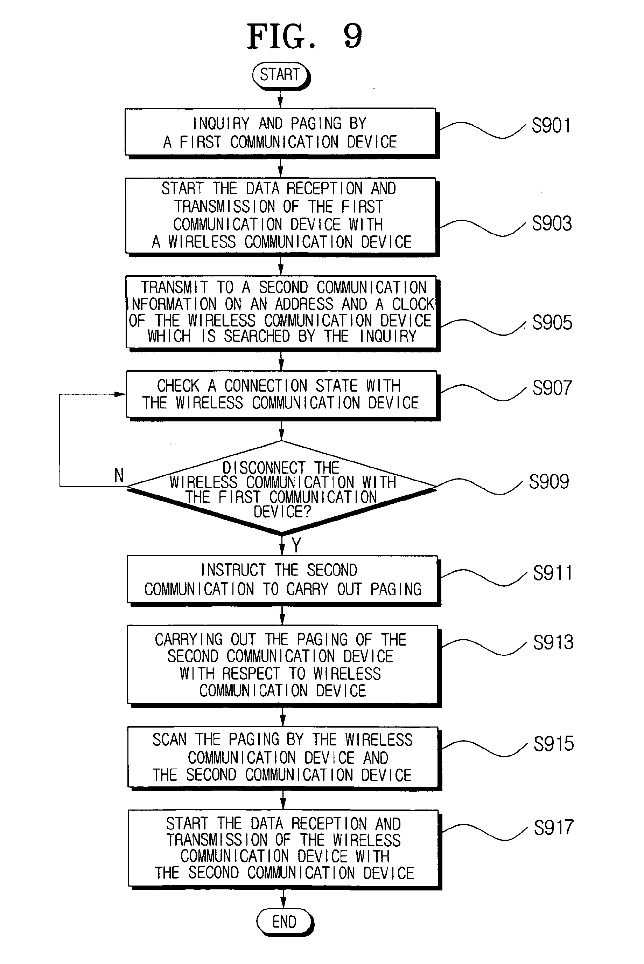

Fig. 8 is a view for showing an example of the hand-off method of Fig. 7, and Fig. 9 is a flow chart for showing the hand-off method of Fig. 7. The operations of the present invention will be described in detail with reference to the accompanying drawings.

Referring to Figs. 8 and 9, if the first communication device 61 is used as the master, the first communication device 61 carries out an inquiry process with respect to a wireless communication device located in the communication allowance range. The first communication device 61 searches for the addresses and clocks of communication devices in the communication allowance range through the inquiry process.

The wireless communication device 63 located in the communication allowance range of the first communication device 61, with respect to the inquiry of the first communication device 61, scans the inquiry, by which the address and clock of the wireless communication device 63 are transmitted to the first communication device 61.

If the first communication device 61 receives the address and clock of the wireless communication device 63, the device 61 carries out a paging process with respect to the wireless communication device 63. The paging process is, as a process that is periodically carried out by the master of the Bluetooth system, a process of waking up a slave in order to activate communications with the slave transmitted with the address and clock.

The wireless communication device 63 scans the paging with respect to the paging of the first communication device 61, by which the wireless communication device 63 informs the first communication device 61 that the device 63 is ready to receive and transmit data(S901).

The paging scan of the wireless communication device 63 starts the data reception and transmission of the wireless communication device 63 with the first communication device 61 (S903). That is, if the first communication device 61 completes the inquiry and paging processes with respect to the wireless communication device 63, the hopping frequencies of the first communication device 61 and the wireless communication device 63 are synchronized, and the first communication device 61 and the wireless communication device 63 respectively enter a response routine to receive and transmit data. It is an important point of the piconet state in the Bluetooth system that the master and the slave use the same channel access code(CAC) and the same channel hopping sequence and the clocks of the master and the slave are synchronized. The channel access code and the channel hopping sequence are obtained from the BD_ADDR of the master, and the timing is determined by the clock of the master.

If the first communication device 61 and the wireless communication device 63 start receiving and transmitting data, the first communication device 61 transmits to the second communication device 65 information on the received address and clock for the wireless communication device 63(S905). Here, when the first communication device 61 and the second communication device 65 are connected to each other by a wire network, the information on the address and clock of the wireless communication device 63 is transmitted through the wire network. However, when the first communication device 61 and the second communication device 65 are not connected to each other by the wire network, the first communication device 61 passes through the inquiry and paging processes with respect to the second communication device 65 and then transmits to the second communication device 65 information on the address and clock for the wireless communication device 63 through the wireless network of Bluetooth system.

The first communication device 61 periodically checks a connection state with the wireless communication device 63(S907). When two or more slaves are connected to one master in a piconet of Bluetooth system, the master allocates a temporary three-bit address to be used when each slave is activated in order to distinguish the respective slaves. That is, the master uses the AM_ADDR used as identification factors of the activated slaves, and all packets received and transmitted between the master and the slaves carry the AM_ADDR. The master checks whether the AM_ADDR is carried through a time slot allocated to each activated slave, and decides that the connection is cut off when the AM_ADDR does not exist.

Particularly, the Bluetooth system has the maximum data transmission distance of 10m so that it has a disadvantage that the data transmission radius is short, and, when at least one of the master and the slaves is a movable mobile, mutual connections is cut off by a hard hand-off if the mobile is out of the communication allowance range during mutually receiving and transmitting data. Here, the wireless communication device 63 is implemented with a movable mobile, and the first communication device 61, which is used as the master, periodically checks a connection state with the wireless communication device 63, which is used as the slave.

If a connection between the first communication device 61 and the wireless communication device 63 is decided to be cut off(S909), the first communication device 61 instructs the second communication device 65 to perform the paging with respect to the wireless communication device 63(S911).

If the paging instruction is received from the first communication device 61, the second communication device 65 carries out the paging with respect to the wireless communication device 63(S913). In this case, when data reception and transmission start between the first communication device 61 and the wireless communication device 63 , the inquiry process with respect to the wireless communication device 63 is omitted since the second communication device 65 receives information on the address and clock for the wireless communication device 63 from the first communication device 61.

The wireless communication device 63 scans the paging carried out by the second communication device 65(S915). The paging scan of the wireless communication device 63 starts receiving and transmitting data between the wireless communication device 63 and the second communication device 65(S917). By doing so, when the wireless communication device 63 is cut off from data reception and transmission with the first communication device 61 by a hard hand-off, since the wireless communication device 63 is out of the communication allowance range with the first communication device 61, the second communication device 65 automatically starts receiving and transmitting data with the first communication device 61. In addition, the second communication device 65 omits the inquiry process with respect to the wireless communication device 63, to thereby improve the communication connection speed and minimize the TCP exponential back-off throughput.

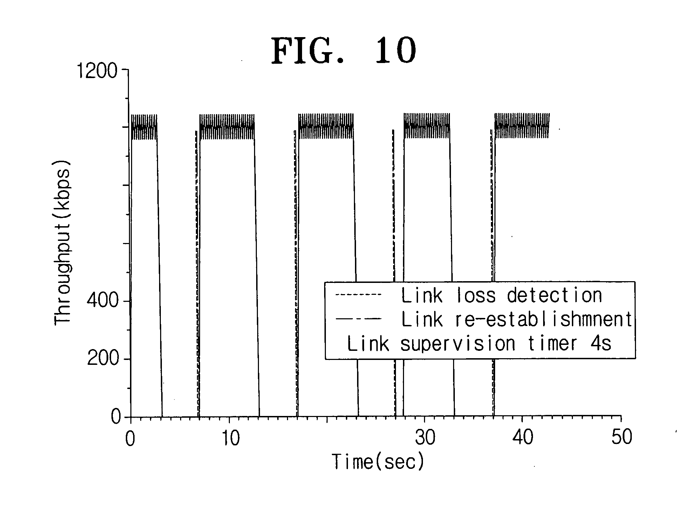

Fig. 10 is a view for showing the throughputs of the hand-off method according to the present invention. In the simulation, the movement speed of the wireless communication device 63 is supposed to be 1.2m/s, the radius of the piconet is supposed to be 10m, and the wireless communication device 63 is supposed to move in one direction up to a point of 60% of the diameter of the piconet. Further, the connection state of the wireless communication device 63 with the first communication device 61 is supposed to be checked every four seconds. It can be seen that the hand-off method for wireless communication systems according to the present invention has an improved performance comparing to the conventional hand-off method(refer to Fig. 6).

The hand-off method for wireless communication systems according to the present invention can shorten time by about 2.25 seconds required on an average for an inquiry process compared to the conventional hard hand-off method, when the difference between the inquiry and inquiry scanning start points is within 1.28 seconds, so that the hand-off throughput can be minimized to enhance the service quality for wireless communication systems.

While the invention has been shown and described with reference to a certain preferred embodiment thereof, it will be understood by those skilled in the art that various changes in form and details may be made therein without departing from the spirit and scope of the invention as defined by the appended claims

## Claims

1. A wireless communication system, comprising:
a first communication device for carrying out an inquiry and paging with respect to a wireless communication device located within a communication allowance range, and starting a connection with the wireless communication device; and
a second communication device for receiving and transmitting data with the wireless communication device when the wireless communication device connected with the first communication device is cut off by a hard hand-off, wherein the first communication device, if connected with the wireless communication device, transmits to the second communication device information on an address and a clock of the wireless communication device which are determined based on the inquiry, and if the first communication device is disconnected with the wireless communication device, the second communication device carries out paging with respect to the wireless communication device based on the received information on the address and clock to start a connection with the wireless communication device.

2. The wireless communication system as claimed in claim 1, wherein the first communication device and the second communication device are connected by a wire network.

3. The wireless communication system as claimed in claim 2, wherein the first communication device, the second communication device, and the wireless communication device are respectively provided with a Bluetooth system.

4. The wireless communication system as claimed in claim 2, wherein the first communication device, after being connected with the wireless communication device, checks a connection state with the wireless communication device at every predetermined period, and, if the first communication device is disconnected from the wireless communication device, the second communication device is instructed to perform the paging with respect to the wireless communication device.

5. The wireless communication system as claimed in claim 4, wherein the second communication device is instructed by the first communication device.

6. The wireless communication system as claimed in claim 4, wherein data packets received and transmitted after the connection of the first communication device with the wireless communication device comprise an activation address indicating an activation state of the wireless communication device, and if the activation address is not received through a time slot of a predetermined period allocated to the wireless communication device, the first communication device decides that the connection with the wireless communication device is cut off.

7. The wireless communication system as claimed in claim 4, wherein the wireless communication device scans the paging carried out by the second communication device.

8. A communication method for wireless communication systems, comprising:
carrying out an inquiry and a paging by a first communication device;
starting data reception and transmission of the first communication device with a wireless communication device located within a communication allowance range based on the inquiry and paging;
transmitting from the first communication device to a second communication device information on an address and clock of the wireless communication device which is determined at least based on the inquiry;
carrying out the paging with respect to the wireless communication device by the second communication device, based on the received address and clock information, if the wireless communication device is disconnected with the first communication device by a hard hand-off; and
starting the data reception and transmission of the wireless communication device with the second communication device by the carrying-out of the paging.

9. The communication method as claimed in claim 8, wherein the first communication device and the second communication device are connected by a wire network.

10. The communication method as claimed in claim 9, wherein the first communication device, the second communication device, and the wireless communication device are respectively provided with a Bluetooth system.

11. The communication method as claimed in claim 9, wherein the first communication device performs steps comprising:
checking a connection state with the wireless communication device at every predetermined period after being connected with the wireless communication device; and
instructing the second communication device to perform the paging with respect to the wireless communication device, if the first communication device is to be disconnected from the wireless communication device.

12. The communication method as claimed in claim 11, wherein data packets received and transmitted after the connection of the first communication device with the wireless communication device include an activation address indicating an activation state of the wireless communication device, and if the activation address is not received through a time slot of a predetermined period allocated to the wireless communication device, the first communication device decides that the connection with the wireless communication device is cut off.

13. The communication method as claimed in claim 11, wherein the wireless communication device performs a step of scanning the paging carried out by the second communication device.
